# EUROPÄISCHE PATENTSCHRIFT

(11) **EP 3 519 747 B1**
(45) Veröffentlichungstag und Bekanntmachung des Hinweises auf die Patenterteilung: **13.05.2020**
(21) Anmeldenummer: 17778251.3
(22) Anmeldetag: 27.09.2017
(51) Int. Cl.: F26B 1/00, F26B 9/06, F26B 21/14

(54) **VERFAHREN UND VORRICHTUNG ZUR TROCKNUNG VON SCHÜTTGUT**
PROCESS AND APPARATUS FOR DRYING BULK MATERIAL
PROCÉDÉ ET APPAREIL POUR LE SÉCHAGE DE MATÉRIEL EN VRAC

(30) Priorität: 27.09.2016 AT 508582016
(43) Veröffentlichungstag der Anmeldung: 07.08.2019
(73) Patentinhaber: Tamburini, Luciano, 9073 Klagenfurt-Viktring (AT)
(72) Erfinder: Tamburini, Luciano, 9073 Klagenfurt-Viktring (AT)
(74) Vertreter: KLIMENT & HENHAPEL
(86) Internationale Anmeldenummer: PCT/EP2017/074554
(87) Internationale Veröffentlichungsnummer: WO 2018/060290

(56) Entgegenhaltungen:
- EP-A2- 2 362 171
- WO-A1-94/15159
- FR-A1- 2 352 732
- JP-A- H07 174 435
- JP-A- 2004 065 073
- KR-A- 20090 128 758
- RU-C1- 2 392 793
- US-A- 4 608 764

## Beschreibung

### GEBIET DER ERFINDUNG

Die Erfindung betrifft ein Verfahren zur konvektiven Trocknung von Schüttgut in einem Behältnis, wobei in einem Trocknungsschritt das zu trocknende Schüttgut in dem Behältnis von einem Gasgemisch umströmt wird, welches in dem zu trocknenden Schüttgut enthaltenes Wasser aufnimmt und anschließend aus dem Behältnis abgeleitet wird, sowie eine entsprechende Trocknungsvorrichtung. Als Schüttgut kommen insbesondere: landwirtschaftliche Güter wie vorzugsweise Erntegüter (Getreide, Mais, Soja, Hülsenfrüchte et cetera), Lebensmittel und Futtermittel, granulare Materie (Kunststoff, Stein und pharmazeutische Granulate) und technische Produkte in Frage.

### STAND DER TECHNIK

Viele landwirtschaftliche Produkte und vor allem Erntegüter werden in der Regel mittels Konvektionstrocknung haltbar gemacht. Bei der Konvektionstrocknung wird das zu trocknende Gut von einem erhitzten Trägergas (zum Beispiel Luft) umströmt, wobei die Wärme des Gases auf das Gut übertragen und Feuchtigkeit an das Gas abgegeben wird. Generell sind feine Trockengüter in der Lage, Feuchtigkeit schneller an die Umgebung abzugeben als grobkörnige. Der Prozess der Lufttrocknung ist abhängig von der Luftfeuchtigkeit, der Lufttemperatur, der Luftgeschwindigkeit im Trockner und der Beschaffenheit der Oberfläche des Trockengutes. Üblicherweise wird die Luft mit Öl- oder Gasöfen erwärmt. Gängige Trocknertypen sind: Container- sowie Silosatztrockner, Dächerschachttrockner, Durchlauftrockner, Lagerbelüftungstrockner und Bandtrocknungsanlagen. Weiters kann in Strahlungstrocknung, Kontakttrocknung und Vakuumtrocknung unterteilt werden, wobei die Kontakttrocknung und vor allem die Konvektionstrocknung am weitesten verbreitet für die Trocknung von Erntegut ist.

Die Trocknung ist für die Haltbarmachung vieler pflanzlicher Erntegüter unerlässlich. Bedingt durch einen hohen Energiebedarf der Trocknungungssysteme, können die Trocknungskosten über ein Drittel der Erzeugungskosten betragen, weshalb eine energieeffiziente Trocknung ein maßgeblicher Aspekt für Betriebe und vor allem für die Wettbewerbsfähigkeit von Getreideproduzenten ist.

Aus der DE10250784 B4 ist ein Verfahren zur konvektiven Trocknung von Nass- oder Feuchtgut bekannt, wobei das zu trocknende Gut in einem Trockner mit einem Trocknungsgas beaufschlagt wird, welches beim Trocknungsvorgang in dem zu trocknenden Gut enthaltenes Wasser aufnimmt und welches nach dem Trocknungsvorgang aus dem Trockner als Abgas abgeführt wird.

Die RU 2392793 C1 betrifft ein Verfahren zum Trocknen und Lagern von Getreide in einem Getreidespeicher, wobei mit gekühlter Luft in zwei Phasen getrocknet wird. In der ersten Phase wird einem Luftkühlaggregat Außen- oder Zuluft zugeführt und auf eine Temperatur unterhalb des Taupunktes abgekühlt, wobei in der Luft enthaltene Feuchtigkeit als Kondensat abgetrennt wird. Anschließend wird die abgekühlte Luft der Getreidemasse im Getreidespeicher zugeführt, um die Getreidemasse zu kühlen, die möglicherweise durch Bakterien eine Selbsterwärmung bei der Einlagerung ausgesetzt wurde. In der zweiten Phase wird die auskondensierte Luft über einen Wärmetauscher wieder auf eine Temperatur gleich wie oder größer als die Außenlufttemperatur erwärmt.

Auch die DE 2947759 A1 arbeitet zur Trocknung von Getreide mit einem kalten und entfeuchteten Gas, nämlich mit Luft.

Durch die Verwendung von Luft zur Trocknung können jedoch im Getreide enthaltene Mikroorganismen aktiv werden, wodurch die Gefahr des Verderbens des Getreides besteht. Oftmals muss eine Trocknungsanlage große Mengen an Erntegut in kurzer Zeit annehmen und verarbeiten (trocknen) können, da in den vergangenen Jahren die Kapazität einiger kommerziell erhältlicher moderner Mähdrescher gestiegen ist und Schlechtwetterbedingungen das Zeitfenster von der Ernte (Drusch) bis zur Lagerfestmachung verkürzen können. Nur selten ergeben sich ideale Wetterverhältnisse, wenn das Erntegut (zum Beispiel Korn) den endgültigen Reifezustand erreicht hat, weshalb eine schnelle Lagerfestmachung unerlässlich ist, da die physikalischen Lagereigenschaften des Ernteguts zum großen Teil von dem Klimazustand (Feuchtegehalt) und der Temperatur während der Ernte und der Lagerung abhängen. Mikroorganismen und biochemische Abbauvorgänge im Korn führen zeitabhängig zu Verlusten, welche sich von einer Qualitätsminderung über einen Gewichtsverlust bis hin zum völligen Verderb erstrecken können. In Silotrocknern sind der Lagerraum und die Trocknerfunktion in einer Einheit kombiniert, wodurch einerseits Platz gespart wird, jedoch kann bei konventioneller Trocknung in belüfteten und ungekühlten Behältnissen wie zum Beispiel einigen Silos, bei großkörnigem oder ungleichmäßig großem Erntegut und vor allem Erntegut mit einer hohen Erntefeuchte wie zum Beispiel Mais, an der Oberfläche von großen Körnern die gewünschte Trocknung optisch erreicht sein, sich jedoch im Korninneren noch Restwasser befinden. Dadurch entsteht ein Schwitzprozess, da Wasser vom Inneren nach außen abwandert und sich an der Oberfläche ansammelt. Dieses Wasser bietet Pilzen, Bakterien und anderen Mikroorganismen einen idealen Nährboden, resultierend in Qualitätsverlusten des Erntgeguts. Schädlingsbefall durch Insekten ist hierzu auch anzuführen. Qualitätsverluste werden allerdings auch durch Übertrocknung des Ernteguts, durch zu lange Trocknungsdauer oder zu hohe Temperatur erzielt.

Die JP H07 174435 A zeigt eine Wärmerückgewinnungsvorrichtung unter Verwendung einer inerten Atmosphäre zur Trocknung von Abfall und Ähnlichem.

Die WO 94/15159 A1 offenbart eine Vorrichtung zur Trocknung von Schüttgut wie Getreide, Gemüse, Holz und ähnliches, wobei die Trocknung in einer Kammer umfassend eine inerte Atmosphäre durchgeführt wird und durch Wasser-Wasserdampf-Austauschmittel mittels semipermeabler Membran das Schüttgut getrocknet wird.

Die JP S60 191181 A offenbart eine Trocknungsvorrichtung für Müll und ähnliches unter Verwendung von zirkulierender Luft in einem geschlossenen Kreislaufsystem, wobei teilweise Prozesswärme zurückgewonnen wird.

### AUFGABE DER ERFINDUNG

Es ist daher eine Aufgabe der Erfindung, die Nachteile des Stands der Technik zu überwinden und ein Verfahren zur Nasslagerung und Trocknung von Schüttgütern und granularer Materie vorzuschlagen, mittels dem Schüttgüter, insbesondere Erntegüter, sofort nach der Ernte nass eingelagert, anschließend getrocknet und trocken gelagert werden können.

### DARSTELLUNG DER ERFINDUNG

Die Aufgabe wird gelöst durch ein Verfahren gemäß Anspruch 1 und eine Vorrichtung gemäß Anspruch 10. Das erfindungsgemäße Verfahren entspricht einer konvektiven Trocknung von Schüttgut in einem Behältnis, wobei in einem Trocknungsschritt das zu trocknende Schüttgut in dem Behältnis von einem Gasgemisch umströmt wird, welches in dem zu trocknenden Schüttgut enthaltenes Wasser aufnimmt und anschließend aus dem Behältnis abgeleitet wird. Dabei ist vorgesehen, dass vor dem Trocknungsschritt ein Kühlschritt durchgeführt wird, bei dem das Schüttgut auf eine Temperatur kleiner der Umgebungstemperatur gebracht wird, wobei sowohl der Kühlschritt als auch der Trocknungsschritt im gleichen gasdichten Behältnis stattfinden.

Diese Vorgehensweise hat den Vorteil, dass Lagerraum gespart wird und Schüttguter, vorzugsweise große Mengen an Erntegut sofort nach dem Drusch in das gasdichte Behältnis eingebracht und gekühlt gelagert werden können, wodurch Qualitätsverluste und Beschädigungen des Schüttguts stark vermindert werden, weshalb eine witterungsunabhängige Einlagerung auch bei der erfindungsgemäßen Trocknungsvorrichtung ermöglicht wird.

Um Pilzen, Bakterien (Escherichia coli, Enterobakterien, insbesondere Salmonellen), anderen Mikroorganismen und Insekten keinen Nährboden beziehungsweise keine günstigen Lebensbedingungen zur Verfügung zu stellen und um den Keimgehalt zu reduzieren, findet der Trocknungsschritt in einer inerten Atmosphäre statt, da wie zuvor erwähnt, während und nach dem Trocknungsschritt Schwitzwasser auf der Oberfläche von biologischem Schüttgut entstehen kann.

Dabei wird die inerte Atmosphäre durch Einbringen eines Inertgasgemisches in das Behältnis erzeugt. Dies hat den Vorteil, dass das Gasgemisch vorab stöchiometrisch gemischt werden und bei Bedarf in das Behältnis eingespeist werden kann, wodurch ein einfaches Nachbegasen des Behältnisses ermöglicht wird.

Gemäß dem erfindungsgemäßen Verfahren besteht das Inertgasgemisch aus einem Großteil an Stickstoff, Kohlenstoffdioxid und zumindest einem Edelgas, vorzugsweise Argon.

Prinzipiell kann das Verfahren mit jeglicher Art von Inertgasen durchgeführt werden, wobei die oben genannte Kombination den Vorteil bietet, dass Stickstoff kostengünstig mit Hilfe einer Druckwechsel-Adsorptionsanlage (PSA) erzeugt werden kann und sich das farb- und geruchslose Gas neutral verhält und keinerlei chemische Rückstände oder Reaktionen am Schüttgut hinterlässt oder eingeht.
Gemäß dem erfindungsgemäßen Verfahren ist vorgesehen, dass im Trocknungsschritt das Gasgemisch über einen ersten Wärmeaustauscher, der mit einem Warmwasserspeicher verbunden ist, erwärmt wird, vorzugsweise auf folgende Temperaturen gebracht: 35 bis 45°C oder 41 bis 65°C oder 55 bis 80°C und in das Innere des Behältnisses geleitet. Die Temperatur des Gasgemisches nach dem ersten Wärmeaustauscher wird aufgrund von folgenden Parametern gewählt: Art, Form, Größe und hygroskopischem Verhalten des zu trocknenden Schüttguts, Verweilzeit des Schüttguts im Behältnis, Gebläseleistung der Ventilatoren und einem erwünschten Trocknungsgrad. Durch die keimtötende beziehungsweise keimmindernde Wirkung des Inertgases wird eine längerfristige Haltbarkeit des Schüttguts ermöglicht und biologisch wertvolle Inhaltsstoffe von Lebens- und Futtermitteln bleiben intakt. Durch die hohe hygienisierende Wirkung des Gasgemisches kombiniert mit einer schonenden Trocknung, ist das Verfahren auch für anspruchsvolle Anwendungen einsetzbar.

Erfindungsgemäß ist vorgesehen, dass die Kühlluft durch einen zweiten Wärmeaustauscher, der mit einem Kaltwasserspeicher verbunden ist, gekühlt wird, und dass mittels Wärmepumpe Prozesswärme aus Wasser, welches aus dem Kaltwasserspeicher stammt und durch Wärmeaustausch im zweiten Wärmeaustauscher erwärmt wurde, zurückgewonnen wird, und über die Wärmepumpe mittels Zulauf dem Warmwasserspeicher Warmwasser zugeführt wird.
Die Energie für die Wärmepumpe kann aus einem Kaltwasserspeicher, einem Brunnen oder einer sonstigen Wärmequelle mit Wärmerückgewinnung entnommen werden.
Es bleibt in einer bevorzugten Ausführungsvariante des erfindungsgemäßen Verfahrens ein Teil der Wärme mittels Prozesswärmerückgewinnung im Kreislauf erhalten, da mittels Wärmepumpe Prozesswärme aus Wasser, welches aus dem Kaltwasserspeicher stammt und durch Wärmeaustausch im zweiten Wärmeaustauscher erwärmt wurde, zurückgewonnen wird. Hierdurch können wiederum Kosten gespart werden und der ökologische Aspekt des erfindungsgemäßen Verfahrens wird weiter hervorgehoben, da Energie sparsam und effizient eingesetzt werden kann und keine umweltbelastenden (beispielsweise Kohlenstoffdioxid) Dampf- und Geruchsemissionen entstehen wie bei Beheizung mit beispielsweise Öl und Gas.
Eine bevorzugte Ausführungsvariante des erfindungsgemäßen Verfahrens sieht vor, dass das Inertgasgemisch aus 70 bis 95%, insbesondere aus 90% Stickstoff, 5 bis 10%, insbesondere 7% Argon und 2 bis 4%, insbesondere 3% Kohlenstoffdioxid besteht, da Stickstoff wie bereits erwähnt ein reaktionsträges und kostengünstiges Füllmedium ist und Kohlenstoffdioxid das Wachstum einiger Pilzarten und Hefen sowie bestimmter Bakterien hemmt. In höheren Konzentrationen wird bereits das Auskeimen von Pilzsporen verhindert und diese werden zerstört. Aufgrund der höheren Dichte von Argon gegenüber dem Medium Luft, besitzt Argon (als auch Kohlenstoffdioxid) gute Verdrängungseigenschaften. Es ist vorzugsweise vorgesehen, dass das Inertgasgemisch schwerer als das Medium Luft ist, um diese aus dem Inneren des Behältnisses bei der Inertisierung des Behältnisses zu verdrängen.

In einer bevorzugten Variante des erfindungsgemäßen Verfahrens wird in einer Endphase des Trocknungsschrittes, also kurz vor der endgültigen Lagerung, zur Entkeimung des Schüttguts die Dosierung des Kohlenstoffdioxids im Inertgasgemisch, auf 5 bis 20% erhöht, um eine verstärkte keimtötende Wirkung und dadurch eine Entkeimung durch die erhöhte Kohlenstoffdioxidkonzentration zu erzielen.

Um das Inertgasgemisch für die Inertisierung und Nachbegasung des gasdichten Behältnisses vorrätig zu haben, wird in einer bevorzugten Ausführungsvariante des erfindungsgemäßen Verfahrens ein Inertgasspeicher verwendet, welcher mit einem Flaschenlager und einer Dosierstation in Verbindung steht. Über ein Magnetventil und über eine Inertgaszuleitung wird das Inertgasgemisch mittels eines Verdichters vorzugsweise auf einen Druck von 30 bis 40 bar gebracht und in den Inertgasspeicher geleitet.

In einer Ausführungsvariante der Erfindung ist daher vorgesehen, dass an eine Zuleitung zum Inertgasspeicher zumindest eine Inertgasquelle anschließbar ist.

Durch die inerte Atmosphäre können Schüttgüter aller Art je nach Anwendung bei 20 bis 110°C erwärmt und mit einem hohen Wirkungsgrad getrocknet werden. Für empfindliche Schüttgüter, vor allem jene aus der Landwirtschaft oder biologische Produkte der Pharmazie, wird eine schonende Temperatur von bevorzugt 30 bis 45°C gewählt, um keine Proteinstrukturen, Enzyme, Pigmente, Antioxidantien oder Vitamine in beispielsweise Lebensmitteln zu zerstören, um eine hohe Keimfähigkeit von Körnern (geringe Trockenmasseverluste) und biologische Wertigkeit des Schüttguts zu wahren. Hierzu wird unter anderem der Schutz des Schüttguts vor Pilzen, insbesondere Lagerpilze und deren Stoffwechselprodukte wie zum Beispiel Mykotoxine, Mikroorganismen wie insbesondere pflanzliche Ein- und Mehrzeller, DNA und RNA Fragmente, Plasmide und Viren, Fumonisine, Fusarien und Insekten durch die inerte Atmosphäre benötigt. Bei einer Trocknungstemperatur zwischen 100 und 120°C können starke Beeinträchtigungen der biologischen Wertigkeit aufgrund von zum Beispiel der Maillard-Reaktionen stattfinden. In kornförmigem Erntegut finden diese Prozesse in noch nicht vollständig ausgereiften Körnern mit einem erhöhten Gehalt an reduzierenden Zuckern bereits bei 80°C statt. Liegt die Kornfeuchtigkeit unter 20 %, ist die Gefahr einer Schädigung größer als bei höheren Kornfeuchten. Aufgrund der inerten Atmosphäre können jedoch niedrigere Trocknungstemperaturen gewählt werden, da zahlreiche chemische Reaktionen neben einer erhöhten Temperatur auch Sauerstoff für ihren Ablauf benötigen. Die Lufttemperatur für die Trocknung von Saatgut sollte beispielsweise 36 °C nicht überschreiten, um Keimschäden zu vermeiden.

Für das erfindungsgemäße Verfahren können auch andere Trocknersysteme, wie z.B. Satztrockner oder Umlauftrockner, zum Einsatz kommen, wenn diese gasdicht umgebaut werden.

In einer bevorzugten Ausführungsvariante findet im Trocknungsschritt eine Umschichtung des Schüttguts statt. Durch diese Umschichtung des Ernteguts bei der Trocknung wird dem Korn eine Ruhephase gegeben, wodurch genügend Zeit zur Verfügung steht, dass eine Wasserabwanderung (Kapillarwanderung) vom Korninneren an die Oberfläche des Korns stattfindet, wodurch entstandenes Schwitzwasser vom Inertgasgemisch aufgenommen und abgeführt werden kann. Durch den geringeren Verlust von Erntegut wird schlussendlich ein höherer Ernteertrag ermöglicht.

Ein weiterer Vorteil des erfindungsgemäßen Verfahrens besteht darin, dass zur Schädlingsbekämpfung, Entkeimung und Konservierung des Schüttguts neben dem Inertgas keine Zusatzstoffe wie Insektizide oder Pestizide benötigt werden, um kurz oder langfristig hygienische Lagerungsbedingungen zu schaffen und um das Schüttgut zu konservieren. Um eine hohe Effizienz zu erreichen, also um Mikroorganismen abzutöten, empfiehlt es sich für einige Lebensmittel, je nach Schüttgut unterschiedlich, die Inertgaskonzentration über einen Zeitraum von 6 bis 40 Wochen, vorzugsweise 3 bis 7 Wochen, bei einer Temperatur von vorzugsweise größer als 15°C bei über 98%, vorzugsweise über 99% im Behältnis zu halten, da diese "Sterilisation" beziehungsweise der Prozess der Dezimierung von Keimen neben einigen Verfahrensparametern auch von der Dauer der Anwendung abhängt.

Eine bevorzugte Ausführungsvariante des erfindungsgemäßen Verfahrens sieht vor, dass der Warmwasserspeicher zumindest aus einer der folgenden Quellen gespeist wird: aus Geothermie, Prozesswärme oder Sonnenkollektoren.
Die Verwendung von zumindest einem Wärmeaustauscher, der mit zumindest einem Warmwasserspeicher verbunden ist, welcher durch zumindest eine Wärmepumpe gespeist wird, die wiederum mit einer Energiequelle in Verbindung steht, hat den Vorteil, dass ökologische Energiequellen wie zum Beispiel Geothermie oder Solarkraft, Aufwindkraftwerke, Wasserkraft et cetera gewählt werden können um einerseits in biologischem Bewusstsein zu handeln und andererseits um Energiekosten zu sparen.

In einer bevorzugten Ausführungsvariante ist das Behältnis so ausgebildet, dass das durch die Gasleitung in das Behältnis einströmende Inertgasgemisch die im Behälter befindliche Luft durch das obere Ventil und den Auslass verdrängt. Das obere Ventil bleibt solange geöffnet, bis die vorbestimmte Menge an Inertgas im Behältnis vorhanden ist. Ist ein Maximalwert von 0,5 - 2%, vorzugsweise 1 - 2% oder 1,5 - 3,5%, vorzugsweise 2 - 3% Restsauerstoff im Behältnis erreicht, so schließt das obere Ventil und die Inertgaszufuhr. Das zugeführte Gasgemisch wird anschließend in einem geschlossenen System mittels zumindest einem Ventilator, vorzugsweise einem Radialventilator im Kreis geführt. Daten wie Behältnisinnendruck, Temperatur, Feuchte, Gasströmung und Restsauerstoffgehalt werden mittels eines SPS- Programms überwacht. Außerdem wird durch die Inertisierung des Behältnisses, die durch Stäube oder Gärprozesse bedingte Explosionsgefahr stark vermindert bis gänzlich verhindert.

In einer bevorzugten Ausführungsvariante des erfindungsgemäßen Verfahrens wird zur Einstellung einer Durchströmungsmenge des Inertgasgemisches eine Regeleinheit verwendet, die eine Steuerung des Drucks und der Durchflussmenge des Gasgemisches ermöglicht. Hierdurch kann eine für das Produkt optimale Durchströmung auf einfache Art und Weise eingestellt werden. Durch den Trocknungsschritt und die inerte Atmosphäre kann das Schüttgut im Behältnis sowohl kurzfristig, z.B. durch einen Umlauftrockner, als auch langfristig, vorzugsweise 5 bis 11 Monate lang gelagert werden. In einer bevorzugten Ausführungsvariante des erfindungsgemäßen Verfahrens ist festgelegt, dass die Strömungsgeschwindigkeit des Inertgasgemisches von der Beschaffenheit und Art des Schüttguts abhängt; genauer gesagt von dessen Feuchte und der Temperatur, bei der man es trocknen will. Diese Parameter werden von Fall zu Fall festgelegt, wobei ein bevorzugtes Gasvolumen bei 20 bis 30.000 kg/h liegt.
Während dem Trocknungsprozess können leichte Gasverluste auftreten. Bei einer zu hohen Rest- Sauerstoffkonzentration im Behältnis, kann mittels des im Inertgasspeicher bereitgestellten Inertgasgemisches nachbegast werden.

Wie zuvor erwähnt, wird Schüttgut und vor allem Erntegut (Getreide, Weizen, et cetera) sofort nach der Ernte in das gasdichte Behältnis gekühlt eingelagert, um die Keimaktivitätenzu minimieren. Während der Einlagerung erfolgt bereits ein Kühlschritt, der bevorzugt mittels Kühlluft, insbesondere Umgebungsluft, umgesetzt wird. Die Dauer der Abkühlung des Schüttguts im Behältnis liegt bei einer Stunde bis zu einem Tag und bevorzugt bei ein bis zwei Tagen.

In einer bevorzugten Ausführungsvariante des erfindungsgemäßen Verfahrens ist vorgesehen, dass als Kühlluft Umgebungsluft verwendet wird. Diese wird aus Kostengründen verwendet und senkt die Temperatur im Behältnis während des Kühlschritts auf kleinere Werte als jene der Umgebungstemperatur, bevorzugt auf 5 bis 13°C und besonders bevorzugt auf 6 bis 12°C. Die Kühlluft wird bevorzugt durch zumindest einen zweiten Wärmeaustauscher, der mit einen Kaltwasserspeicher verbunden ist, gekühlt.

Bevorzugter Weise wird in einer Variante des erfindungsgemäßen Verfahrens der Kaltwasserspeicher zusätzlich von einem Brunnen gespeist. Andere Kältequellen wie beispielsweise ein Fluss oder ein See sind denkbar. Vorteilig ist, dass während des Kühlschrittes zusätzliches Schüttgut in das Behältnis eingebracht werden kann, da somit auch zusätzlich eingebrachtes Erntegut sofort nach der Ernte gekühlt eingelagert werden kann.

In einer Ausführungsvariante der Erfindung ist vorgesehen, dass die Energie für die Wärmepumpe zusätzlich aus einem Brunnen oder einer sonstigen Wärmequelle mit Wärmerückgewinnung entnommen wird.

Ein weiterer Vorteil des erfindungsgemäßen Verfahrens besteht darin, dass das Gasgemisch in einer bevorzugten Ausführungsvariante in einem gasdichten geschlossenen System im Kreis geführt wird, da somit die Umweltbelastung und die Kosten reduziert werden. Problematisch ist, dass das bei bekannten Trocknungsverfahren anfallende Abgas je nach Beschaffenheit des zu trocknenden Nass- oder Feuchtguts mit Geruchs- und zu Teil mit Keimen belastet sein kann. Derartige Abgase dürften in der Regel nicht ohne vorherige Behandlung in die Umwelt abgegeben werden. Insbesondere bei der Trocknung von stark wasserhaltigem Getreide (Mais) bestehen Akzeptanzprobleme durch die Öffentlichkeit, mit welchen sich die Betreiber entsprechender Anlagen auseinandersetzen müssen. Durch die inerte Atmosphäre wird der Abbau von organischen Komponenten in dem zu trocknenden Gut vorteilhafterweise gefördert; es kommt somit zu einer Hygienisierung (Entkeimung).

Das im Trocknungsschritt mit Feuchtigkeit gesättigte Gasgemisch wird vor dem erneuten Erwärmen in einer besonders bevorzugten Variante des erfindungsgemäßen Verfahrens auskondensiert, also das enthaltene Wasser großteils abgeschieden, wodurch nur bei Bedarf nachbegast wird und kein vollständiger Gaswechsel stattfinden muss. Bei dieser Verfahrensvarianate werden beim Trocknungsvorgang das Trocknungsgas in einem geschlossenen Kreis geführt und die Feuchte auskondensiert. Somit werden mit dem Verfahren Geruchsstoffe und Keime durch das Inertgasgemisch eliminiert und mit dem Kondensat aus dem Trockner abgeführt. Dadurch kann der Einsatz von kostenintensiven Biowäschern oder Biofiltern im Abgasstrom eingespart werden.

Bevorzugt wird bei der Erntegutannahme und/ oder der Einlagerung mittels Stichproben der Toxingehalt des Ernteguts getestet, wobei Toxinwerte für eine Vielzahl verschiedener Toxine vorzugsweise unter 10 µg/kg liegen. Eine umfassende Qualitätskontrolle bei der Annahme des Ernteguts (Vorreinigung, optische Sortierung) kann eine effiziente Reduktion von Mykotoxinen in den Endprodukten, insbesondere bei Mais erzielen, wodurch eine hohe Qualität des Produktes über die gesamte Wertschöpfungskette erzielt werden kann.

In einer weiteren bevorzugten Variante des erfindungsgemäßen Verfahrens kommen in der Trocknungsvorrichtung als Mittel zur Einfuhr von Schüttgut in das gasdichte Behältnis eine Schüttgutzuführung, insbesondere in Form eines Liftes, und ein Austragungsmechanismus, insbesondere in Form einer Austragungsschnecke, in Frage. Zur Umschichtung des Schüttguts im Behältnis wird ein Teil des Schüttguts im unteren Teil des Behältnisses nach einer angemessenen Trocknungszeit schichtenweise durch die horizontal kreisende und rotierende Austragungsschnecke mittig ausgetragen. Nach der Austragung wird ein unterhalb der Behältnisplatte befindlicher Schieber vorzugsweise pneumatisch verschlossen. Eine horizontale Paddelschnecke befördert das ausgetragene Schüttgut zu einem Lift, der es nach oben transportiert und bei geöffneter Einfuhrklappe über einen Zubringmechanismus wie vorzugsweise einem Förderband, einer Schnecke oder einer Rutsche, zurück in das Behältnis befördert. Mit dieser Umschichtung wird gewährleistet, dass das Schüttgut angemessen durchmischt wird und keine feuchten "Nester" in einer Schüttmasse entstehen können. Im Falle von körnigem Erntegut, bekommt das Korn bei dieser Art der Umschichtung eine Ruhephase, um im Korninneren enthaltenes Wasser an die Oberfläche abzuleiten. Sowohl die Einrichtungen für die Schüttgutzuführung als auch für den Austrag und die Umschichtung sind im Falle eines gasdichten geschlossenen Systems gasdicht auszuführen.

In einer Ausführungsvariante der Erfindung ist daher vorgesehen, dass zumindest ein Mittel zur Umschichtung des Schüttguts im Behältnis vorhanden ist.

In einer bevorzugten Ausführungsvariante des erfindungsgemäßen Verfahrens wird das Behältnis, vorzugsweise ein Silo, oder ein Umlauftrockner oder anderer Trockner, kontinuierlich und automatisch mit dem zu trocknenden Schüttgut beschickt, der Kühlschritt eingeleitet, inertisiert, der Trocknungsschritt eingeleitet und nach Abschluss des Trocknungsschritts entleert, sowie das getrocknete und zumindest keimreduzierte Schüttgut einer weiteren Verarbeitung zugeführt. Im Inneren des Behältnisses befinden sich Sensoren und Sonden, welche die Luftfeuchte und die Temperatur messen. Über eine Steuereinheit werden während des Trocknungsschrittes Intervallzeiten für die Umschichtung des Schüttguts bestimmt; genauer gesagt wann das Schüttgut über vorzugsweise eine Austragungsschnecke entnommen und über eine Erntegutzuführung, vorzugsweise einen Lift, vertikal nach oben und zurück in das Behältnis befördert wird. Die Steuereinheit regelt neben den Intervallzeiten auch den Einfluss auf den Wärmeübergang zwischen dem Heizmedium, vorzugsweise in Form des Wärmeaustauschers, und dem Schüttgut, vorzugsweise Erntegut, sowie die Strömungsgeschwindigkeit des Gasgemisches mittels Regulation der Gebläseleistung.

Bevorzugt wird die Anfangsfeuchte von Erntegut von 30 bis 40% auf 10 bis 14% bei Mais oder von 12 bis 18% auf 8 bis 10% bei Weizen oder Soja in mehreren Vorgängen der Umschichtung im Behältnis, bei einer vorgegebenen Zeit und bei niedriger Temperatur schonend durch Trocknung reduziert. Durch die Automatisierung der zuvor erwähnten Vorgänge ist eine einfache Prozessführung möglich, da im Gegensatz zu vielen herkömmlichen Verfahren, einige Prozessparameter konstant gehalten werden können.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
Fig. 1 eine schematische Darstellung des Kühlprozesses des erfindungsgemäßen Verfahrens
Fig. 2 eine schematische Darstellung des Inertisierungsvorgangs des erfindungsgemäßen Verfahrens
Fig. 3 eine schematische Darstellung des Trocknungsprozesses des erfindungsgemäßen Verfahrens

### WEGE ZUR AUSFÜHRUNG DER ERFINDUNG

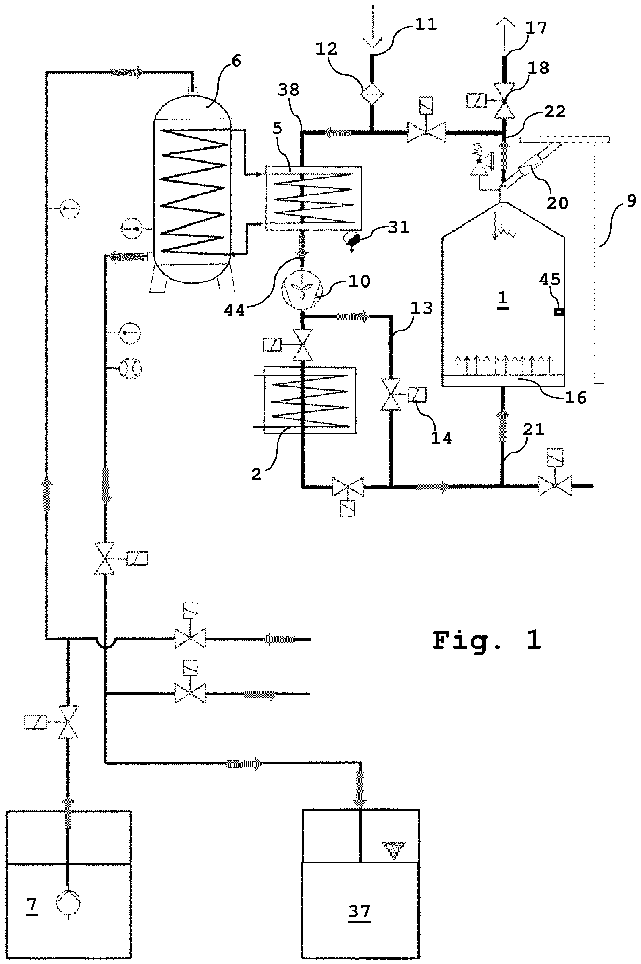

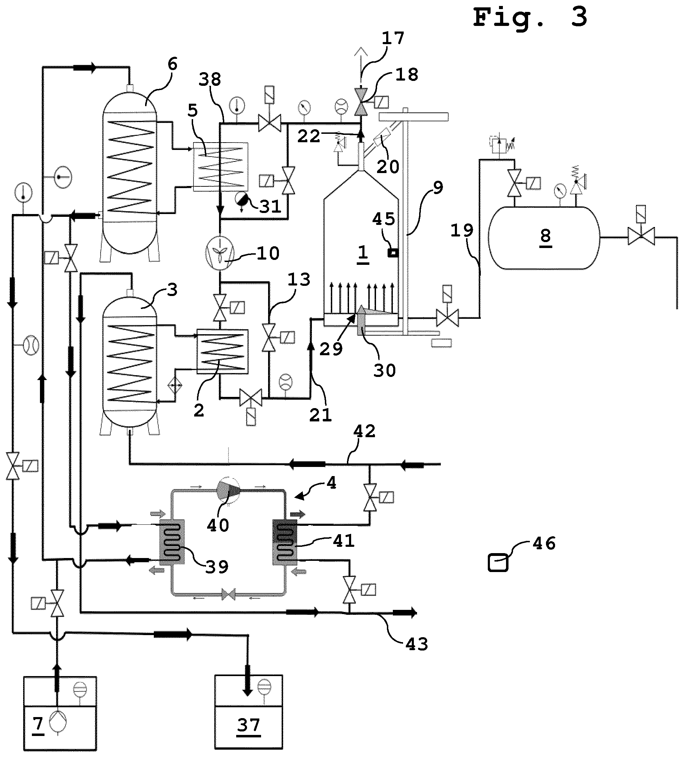

Figur 1 zeigt eine schematische Darstellung des Kühlschrittes des erfindungsgemäßen Verfahrens. Während des gesamten Füllvorgangs wird das Schüttgut, vorzugsweise Erntegut, über eine Schüttgutzuführung 9, vorzugsweise einen Lift, in ein Behältnis 1, vorzugsweise einen Silo, eingebracht. Das Schüttgut, vorzugsweise Erntegut, wird sofort bei der Einbringung mittels Kühlluft auf eine Temperatur kleiner der Umgebungstemperatur, vorzugsweise auf 5 bis 11°C oder 7 bis 13°C abgekühlt. Die Kühlluft wird aus der Umgebungsluft gewonnen und wird über einen Lufteinlass 11 durch einen Filter 12 mittels zumindest einem Ventilator 10, vorzugsweise einem Radialventilator, eingesaugt, über die Leitung 38 zu zumindest einem zweiten Wärmeaustauscher 5 geleitet, wo sie mittels dieses Wärmeaustauschers, der mit zumindest einem Kaltwasserspeicher 6 in Kontakt steht, der über eine Kältequelle, vorzugsweise einen Brunnen 7 und/ oder einer Wärmepumpe 4 (siehe Fig. 3) gespeist wird, gekühlt wird. Wasser, das durch den Wärmeaustausch mit der Kühlluft im zweiten Wärmeaustauscher 5 erwärmt wurde, wird in einen Rücklauf-Sickerbrunnen 37 abgeführt oder der Wärmepumpe 4 zugeführt (siehe Fig. 3).

Vom Wärmeaustauscher 5 aus wird die Kühlluft über eine Gasleitung 44, den Ventilator 10, eine Bypassleitung 13 geführt, von einem Ventil 14 gesteuert und über die Gaszuleitung 21 in einen vorzugsweise horizontalen, runden oder quaderförmigen Boden des Behältnisses 1 eingebracht, welcher mit Durchtrittsöffnungen 16, vorzugsweise mit Lochblechen oder Spaltsieben, versehen ist und mittels dieser Durchtrittsöffnungen 16 gleichmäßig im Inneren des Behältnisses 1, vorzugsweise Silos verteilt. Die Kühlluft steigt nach oben und durchströmt somit das im Behältnis 1 befindliche Schütt- beziehungsweise Erntegut und kühlt es auf eine Temperatur von 5 bis 11°C, bevorzugt 6 bis 10°C oder 7 bis 13°C, bevorzugt 8 bis 12°C ab. Mittels des Auslasses 17, wird die vom Schütt- oder Erntegut erwärmte Kühlluft über ein oberes Ventil 18, ins Freie geleitet. Eine Ausführungsvariante, in der statt einem oberen Ventil 18 eine Klappe oder ein ähnlicher Öffnungs- beziehungsweise Verschlussmechanismus verwendet wird, ist denkbar.

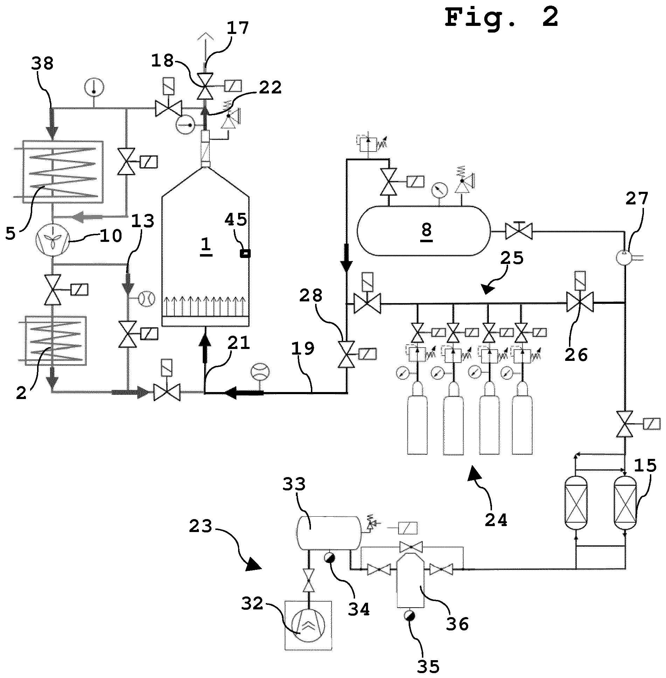

Während der Kühlung und während der Befüllung des Behältnisses 1 bleibt eine Inertgaszufuhrleitung 19 (siehe Fig. 2) verschlossen, um unnötigen Verbrauch von Inertgas zu vermeiden. Bei Erreichen einer bevorzugten Füllstandsmenge, werden eine gasdicht verschließbare Befüllungsklappe 20 beziehungsweise ein gasdicht verschließbarer Einlassschieber und der gasdicht verschließbare Lufteinlass 11 geschlossen und eine Inertisierung des Behältnisses 1 beginnt.

In Figur 2 ist eine schematische Darstellung des Inertisierungsvorgangs des erfindungsgemäßen Verfahrens dargestellt. Zuallererst wird ein Inertgasgemisch, welches vorzugsweise aus Stickstoff, Kohlendioxyd und zumindest einem Edelgas (Helium, Neon, Argon, Krypton, Xenon, Radon) besteht, zur raschen Beschickung des Behältnisses 1 und zur Nachbegasung in einem Inertgasspeicher 8 bereitgestellt, wobei Stickstoff vorzugsweise mittels einer PSA (Pressure Swing Adsorption) - Anlage 15 in Kombination mit einer Druckluftanlage 23 (bestehend aus: Kompressor 32, Druckluftbehälter 33 mit Kondensatablass 34, Trockner 36 mit Kondensatablass 35) erzeugt wird. In einer bevorzugten Ausführungsvariante des erfindungsgemäßen Verfahrens ist ein Flaschenlager 24 über eine Dosierstation 25, ein Magnetventil 26 und über einen Verdichter 27 mit dem Inertgasspeicher 8 verbunden. In einer bevorzugten Ausführungsvariante wird das Inertgasgemisch auf einen Druck von 30 - 40 bar mittels des Verdichters 27 gebracht.

Über ein Magnetventil 28 wird das Inertgasgemisch weitergeleitet und der Gasdruck mittels Druckminderer auf vorzugsweise 0,1 bis 0,2 bar oder 0,2 bis 1,0 bar reduziert und das Gasgemisch mittels Inertgaszufuhrleitung 19 und Gaszuleitung 21 in das Behältnis 1 geleitet, wo es durch die Durchtrittsöffnungen 16, vorzugsweise Spaltsiebe oder Lochbleche, gleichmäßig im Inneren des Behältnisses 1, vorzugsweise Silos verteilt wird. Nach vollständiger Befüllung des Behältnisses 1 mit dem Inertgasgemisch, also nach Verdrängung des Luftsauerstoffs, wird das obere Ventil 18 geschlossen.

Figur 3 zeigt eine schematische Darstellung des Trocknungsschritts des erfindungsgemäßen Verfahrens. Am Boden des Behältnisses 1 ist eine gasdicht verschließbare Produktauslassöffnung 29 angeordnet, welche mittels eines Auslassschiebers oder ähnlichem verschließbar ist. Als Produktaustragungsmechanismus 30 wird vorzugsweise eine Austragungsschnecke verwendet. Bei geschlossenem, oberen Ventil 18, wird das mit Feuchtigkeit gesättigte Inertgasgemisch über die Gasableitung 22 zum zweiten Wärmeaustauscher 5 geleitet, wo Wasser aus dem Gas vorzugsweise bei 9 bis 21°C oder 4 bis 19°C auskondensiert und über einen Kondensatablass 31 an die Umgebung abgeführt wird. Das entwässerte Inertgasgemisch wird mittels Ventilator 10 zum ersten Wärmeaustauscher 2 geleitet, wo es auf die gewünschte Temperatur gebracht und über die Gaszuleitung 21 in das Innere des Behältnisses 1 zurück geleitet wird.

Vom zweiten Wärmeaustauscher 5 erwärmtes Wasser kann aus dem Kaltwasserspeicher 6 einerseits in den Rücklauf-Sickerbrunnen 37 abgeführt oder der Wärmepumpe 4 zur Abkühlung zugeführt und abgekühlt wieder dem Kaltwasserspeicher 6 zugeführt werden.

Über die Wärmepumpe 4 (bestehend aus Verdampfer 39, Kompressor 40, und Verflüssiger 41) kann mittels Zulauf 42 dem Warmwasserspeicher 3 Warmwasser zugeführt werden. Von einer sonstigen Wärmequelle 46 kann Wärme über den Zulauf 42 direkt zu dem Warmwasserspeicher 3 zugeführt werden. Warmes Wasser kann aus dem Warmwasserspeicher 3 über einen Rücklauf 43 wieder der Wärmepunpe 4 zum Erwärmen rückgeführt oder aus dem Prozess ausgekoppelt werden.

### BEZUGSZEICHENLISTE

- 1: Behältnis
- 2: erster Wärmeaustauscher
- 3: Warmwasserspeicher
- 4: Wärmepumpe
- 5: zweiter Wärmeaustauscher
- 6: Kaltwasserspeicher
- 7: Brunnen
- 8: Inertgasspeicher
- 9: Schüttgutzuführung
- 10: Ventilator
- 11: Lufteinlass
- 12: Filter
- 13: Bypassleitung
- 14: Ventil
- 15: PSA - Anlage
- 16: Durchtrittsöffnungen
- 17: Auslass
- 18: Oberes Ventil
- 19: Inertgaszufuhrleitung
- 20: Befüllungsklappe
- 21: Gaszuleitung
- 22: Gasableitung
- 23: Druckluftanlage
- 24: Flaschenlager
- 25: Dosierstation
- 26: Magnetventil
- 27: Verdichter
- 28: Magnetventil
- 29: Produktauslassöffnung
- 30: Produktaustragungsmechanismus
- 31: Kondensatablass 3
- 32: Kompressor
- 33: Druckluftbehälter
- 34: Kondensatablass
- 35: Kondensatablass
- 36: Trockner
- 37: Rücklauf-Sickerbrunnen
- 38: Leitung
- 39: Verdampfer
- 40: Kompressor
- 41: Verflüssiger
- 42: Zulauf
- 43: Rücklauf
- 44: Gasleitung
- 45: Sensoren
- 46: Sonstige Wärmequelle

## Patentansprüche

1. Verfahren zur konvektiven Trocknung von Schüttgut in einem Behältnis (1), wobei in einem Trocknungsschritt das zu trocknende Schüttgut in dem Behältnis (1) von einem Gasgemisch umströmt wird, welches in dem zu trocknenden Schüttgut enthaltenes Wasser aufnimmt und anschließend aus dem Behältnis (1) abgeleitet wird, wobei vor dem Trocknungsschritt ein Kühlschritt durchgeführt wird, bei dem das Schüttgut auf eine Temperatur kleiner der Umgebungstemperatur gebracht wird, wobei sowohl der Kühlschritt als auch der Trocknungsschritt im gleichen gasdichten Behältnis (1) stattfinden, wobei der Trocknungsschritt in einer inerten Atmosphäre stattfindet, wobei die inerte Atmosphäre durch Einbringen eines Inertgasgemisches in das Behältnis (1) erzeugt wird, wobei das Inertgasgemisch aus Stickstoff, Kohlenstoffdioxid und zumindest einem Edelgas, vorzugsweise Argon besteht, wobei im Trocknungsschritt das Gasgemisch über einen ersten Wärmeaustauscher (2), der mit einem Warmwasserspeicher (3) verbunden ist, erwärmt wird, wobei die Kühlluft durch einen zweiten Wärmeaustauscher (5), der mit einem Kaltwasserspeicher (6) verbunden ist, gekühlt wird, **und** wobei mittels Wärmepumpe (4) Prozesswärme aus Wasser, welches aus dem Kaltwasserspeicher stammt und durch Wärmeaustausch im zweiten Wärmeaustauscher (5) erwärmt wurde, zurückgewonnen wird, und über die Wärmepumpe (4) mittels Zulauf (42) dem Warmwasserspeicher (3) Warmwasser zugeführt wird.

2. Verfahren nach Anspruch 1, **dadurch gekennzeichnet, dass** das Inertgasgemisch aus 70 - 95%, insbesondere 90% Stickstoff, 5 -10%, insbesondere 7% Argon und 2 - 4%, insbesondere 3% Kohlenstoffdioxid besteht.

3. Verfahren nach einem der Ansprüche 1 bis 2, **dadurch gekennzeichnet, dass** in einer Endphase des Trocknungsschrittes zur Entkeimung des Schüttguts die Dosierung des Kohlenstoffdioxids im Inertgasgemisch auf 5 - 20% erhöht wird.

4. Verfahren nach einem der vorhergehenden Ansprüche, **dadurch gekennzeichnet, dass** im Trocknungsschritt eine Umschichtung des Schüttguts stattfindet.

5. Verfahren nach Anspruch 1, **dadurch gekennzeichnet, dass** das im Trocknungsschritt mit Feuchtigkeit gesättigte Gasgemisch vor dem erneuten Erwärmen auskondensiert wird.

6. Verfahren nach einem der vorhergehenden Ansprüche, **dadurch gekennzeichnet, dass** der Kühlschritt mittels Kühlluft, insbesondere Umgebungsluft, umgesetzt wird.

7. Verfahren nach einem der vorhergehenden Ansprüche, **dadurch gekennzeichnet, dass** die Temperatur im Behältnis (1) während des Kühlschritts auf 5 bis 13°C, vorzugsweise 6 bis 12°C, abgesenkt wird.

8. Verfahren nach einem der vorhergehenden Ansprüche, **dadurch gekennzeichnet, dass** während des Kühlschritts zusätzliches Schüttgut in das Behältnis (1) eingebracht wird.

9. Verfahren nach einem der vorhergehenden Ansprüche, **dadurch gekennzeichnet, dass** das Gasgemisch in einem gasdichten geschlossenen System im Kreis geführt wird.

10. Trocknungsvorrichtung zur Durchführung eines Verfahrens nach einem der Ansprüche 1 bis 9, umfassend Mittel zur Einbringung von Schüttgut in ein gasdichtes Behältnis (1) und Mittel zur Abfuhr von Schüttgut aus dem Behältnis (1), einer Gaszuleitung (21) und einer Gasableitung (22), wobei ein erster (2) und ein zweiter (5) Wärmeaustauscher mit dem Behältnis (1) verbunden sind, wobei der zweite Wärmeaustauscher (5) zur Kühlung und der erste Wärmeaustauscher (2) zur Erwärmung eines Gasgemisches verwendbar sind, welches über die Gaszuleitung (21) dem gasdichten Behältnis (1) zuführbar ist, **wobei** zum Zuführen von Inertgas in das Behältnis (1) ein Inertgasspeicher (8), insbesondere über die Gaszuleitung (21), mit dem Behältnis (1) verbunden ist, **wobei** der erste Wärmeaustauscher (2) mit einem Warmwasserspeicher (3) verbunden ist, **wobei** der Warmwasserspeicher (3) zumindest mit einer Wärmepumpe (4) als Quelle verbunden ist, **wobei** die Wärmepumpe (4) mit zumindest einem Kaltwasserspeicher (6) als Quelle verbunden ist, **und wobei** der zweite Wärmeaustauscher (5) mit einem Kaltwasserspeicher (6) verbunden ist, und wobei mittels Wärmepumpe (4) Prozesswärme aus Wasser, welches aus dem Kaltwasserspeicher stammt und durch Wärmeaustausch im zweiten Wärmeaustauscher (5) erwärmt wurde,
zurückgewonnen werden kann, und über die Wärmepumpe (4) mittels Zulauf (42) dem Warmwasserspeicher (3) Warmwasser zugeführt werden kann.

11. Trocknungsvorrichtung nach Anspruch 10, **dadurch gekennzeichnet, dass** der Warmwasserspeicher (3) zusätzlich zumindest mit einer der folgenden Quellen verbunden ist: mit Geothermie, Prozesswärme, Sonnenkollektoren.

12. Trocknungsvorrichtung nach Anspruch 11, **dadurch gekennzeichnet, dass** die Wärmepumpe (4) zusätzlich mit zumindest einer der Quellen verbunden ist: Geothermie, Solarkollektoren oder sonstigen Wärmequellen (46) mit Wärmerückgewinnung.

13. Trocknungsvorrichtung nach Anspruch 12, **dadurch gekennzeichnet, dass** der Kaltwasserspeicher (6) mit einem Brunnen (7) verbunden ist.

14. Trocknungsvorrichtung nach einem der vorhergehenden Ansprüche, **dadurch gekennzeichnet, dass** ein Lufteinlass (11) für Umgebungsluft vorgesehen ist, der zur Kühlung der Umgebungsluft mit dem zweiten Wärmeaustauscher (5) verbunden ist, und die gekühlte Umgebungsluft über eine Bypassleitung (13) unter Ausschluss des ersten Wärmeaustauschers (2) durch die Gaszuleitung (21) in das Behältnis (1) leitbar ist.

15. Trocknungsvorrichtung nach einem der vorhergehenden Ansprüche, **dadurch gekennzeichnet, dass** das Behältnis (1) über die Gasableitung (22) zum Zwecke der Kondensation von Wasser aus dem Gasgemisch mit dem zweiten Wärmeaustauscher (5) verbunden ist, welcher über eine Gasleitung (44) mit dem ersten Wärmeaustauscher (2) in Verbindung steht, der über die Gaszuleitung (21) mit dem Behältnis (1) in einem für das Gasgemisch geschlossenen Kreislauf verbunden ist.

## Claims

1. Method for convective drying of bulk material in a container (1), wherein in a drying step a gas mixture flows around the bulk material to be dried in the container (1), which gas mixture takes up water contained in the bulk material to be dried and is then discharged from the container (1), wherein before the drying step a cooling step is carried out in which the bulk material is brought to a temperature lower than the ambient temperature, wherein both the cooling step and the drying step take place in the same gas-tight container (1), **wherein** the drying step takes place in an inert atmosphere, **wherein** the inert atmosphere is produced by introducing an inert gas mixture into the container (1), **wherein** the inert gas mixture consists of nitrogen, carbon dioxide and at least one noble gas, preferably argon, **wherein** in the drying step the gas mixture is heated via a first heat exchanger (2), which is connected to a hot-water storage tank (3), **wherein** the cooling air is cooled by a second heat exchanger (5), which is connected to a cold water storage tank (6), **and wherein** process heat is recovered by means of a heat pump (4) from water which originates from the cold water storage tank and has been heated by heat exchange in the second heat exchanger (5), and hot water is supplied to the hot water storage tank (3) via the heat pump (4) by means of an inlet (42).

2. Method according to claim 1, **characterized in that** the inert gas mixture consists of 70-95%, in particular 90% nitrogen, 5-10%, in particular 7% argon, and 2-4%, in particular 3% carbon dioxide.

3. Method according to one of claims 1 to 2, **characterized in that,** in a final phase of the drying step for sterilizing the bulk material, the dosage of the carbon dioxide in the inert gas mixture is increased to 5-20%.

4. Method according to one of the preceding claims, **characterized in that** a shifting of the bulk material takes place in the drying step.

5. Method according to claim 1, **characterized in that** in the drying step the gas mixture saturated with moisture is condensed out before renewed heating.

6. Method according to one of the preceding claims, **characterized in that** the cooling step is implemented by means of cooling air, in particular ambient air.

7. Method according to one of the preceding claims, **characterized in that** the temperature in the container (1) is lowered to 5 to 13°C, preferably 6 to 12°C, during the cooling step.

8. Method according to one of the preceding claims, **characterized in that** additional bulk material is introduced into the container (1) during the cooling step.

9. Method according to one of the preceding claims, **characterized in that** the gas mixture is circulated in a gas-tight closed system.

10. Drying device for performing a method according to one of claims 1 to 9, comprising means for introducing bulk material into a gas-tight container (1) and means for discharging bulk material from the container (1), a gas supply line (21) and a gas discharge line (22), wherein a first (2) and a second (5) heat exchanger are connected to the container (1), wherein the second heat exchanger (5) can be used for cooling and the first heat exchanger (2) can be used for heating a gas mixture which can be supplied to the gas-tight container (1) via the gas supply line (21), **wherein** an inert gas storage tank (8) is connected to the container (1), in particular via the gas supply line (21), for supplying inert gas into the container (1), **wherein** the first heat exchanger (2) is connected to a hot water storage tank (3), **wherein** the hot water storage tank (3) is connected to at least one heat pump (4) as the source, **wherein** the heat pump (4) is connected to at least one cold water storage tank (6) as the source, **and wherein** the second heat exchanger (5) is connected to a cold water storage tank (6), and wherein process heat can be recovered by means of a heat pump (4) from water which originates from the cold water storage tank and has been heated by heat exchange in the second heat exchanger (5), and hot water can be supplied to the hot water storage tank (3) via the heat pump (4) by means of an inlet (42).

11. Drying device according to claim 10, **characterized in that** the hot water storage tank (3) is connected to at least one of the following sources: geothermal energy, process heat, solar collectors.

12. Drying device according to claim 11, **characterized in that** the heat pump (4) is connected to at least one of the following sources: geothermal energy, solar collectors or other heat sources (46) with heat recovery.

13. Drying device according to claim 12, **characterized in that** the cold water storage tank (6) is connected to a well (7) .

14. Drying device according to one of the preceding claims, **characterized in that** an air inlet (11) for ambient air is provided, which is connected to the second heat exchanger (5) for cooling the ambient air, and the cooled ambient air can be conducted via a bypass line (13), by excluding the first heat exchanger (2), through the gas supply line (21) into the container (1).

15. Drying device according to one of the preceding claims, **characterized in that** the container (1) is connected via the gas discharge line (22) to the second heat exchanger (5) for the purpose of condensing water from the gas mixture, which communicates via a gas line (44) with the first heat exchanger (2), which is connected via the gas supply line (21) to the container (1) in a closed circuit for the gas mixture.

## Revendications

1. Procédé pour le séchage par convection de matière en vrac dans un contenant (1), dans lequel, dans une étape de séchage, la matière en vrac à sécher est parcourue dans le contenant (1) par un mélange de gaz qui absorbe l'eau contenue dans la matière en vrac à sécher et l'évacue ensuite hors du contenant (1), l'étape de séchage étant précédée par une étape de refroidissement lors de laquelle la matière en vrac est amenée à une température inférieure à la température ambiante, l'étape de refroidissement aussi bien que l'étape de séchage ayant lieu dans le même contenant (1) étanche au gaz, l'étape de séchage ayant lieu dans une atmosphère inerte, laquelle atmosphère inerte est produite par l'introduction d'un mélange de gaz inertes dans le contenant (1), le mélange de gaz inertes se composant d'azote, de dioxyde de carbone et d'au moins un gaz rare, de préférence d'argon, le mélange de gaz étant chauffé dans l'étape de séchage par un premier échangeur de chaleur (2) communiquant avec un réservoir d'eau chaude (3), l'air de refroidissement étant refroidi par un deuxième échangeur de chaleur (5) qui communique avec un réservoir d'eau froide (6) et de la chaleur de process étant récupérée au moyen d'une pompe à chaleur (4) à partir d'eau provenant du réservoir d'eau froide et chauffée par échange thermique dans le deuxième échangeur de chaleur (5) et renvoyée par la pompe à chaleur (4) au réservoir d'eau chaude (3) au moyen d'une arrivée (42).

2. Procédé selon la revendication 1, **caractérisé en ce que** le mélange de gaz inertes se compose à 70-95 %, en particulier 90 %, d'azote, à 5-10 %, en particulier 7 %, d'argon et à 2-4 %, en particulier 3 %, de dioxyde de carbone.

3. Procédé selon l'une des revendications 1 à 2, **caractérisé en ce que** dans une phase finale de l'étape de séchage, le dosage du dioxyde de carbone dans le mélange de gaz inertes est augmenté à 5-20 % pour désinfecter la matière en vrac.

4. Procédé selon l'une des revendications précédentes, **caractérisé en ce que** la matière en vrac est retournée dans l'étape de séchage.

5. Procédé selon la revendication 1, **caractérisé en ce que** le mélange de gaz saturé d'humidité dans l'étape de séchage est condensé avant le nouveau chauffage.

6. Procédé selon l'une des revendications précédentes, **caractérisé en ce que** l'étape de refroidissement est exécutée au moyen d'air froid, en particulier d'air ambiant.

7. Procédé selon l'une des revendications précédentes, **caractérisé en ce que** la température dans le contenant (1) est abaissée pendant l'étape de refroidissement entre 5 et 13 °C, de préférence entre 6 et 12 °C.

8. Procédé selon l'une des revendications précédentes, **caractérisé en ce que** pendant l'étape de refroidissement, de la matière en vrac supplémentaire est introduite dans le contenant (1).

9. Procédé selon l'une des revendications précédentes, **caractérisé en ce que** le mélange de gaz est guidé en circuit dans un système fermé étanche au gaz.

10. Dispositif de séchage pour l'exécution d'un procédé selon l'une des revendications 1 à 9, comprenant des moyens pour introduire de la matière en vrac dans un contenant (1) étanche au gaz et des moyens pour extraire de la matière en vrac du contenant (1), avec une conduite d'arrivée de gaz (21) et une conduite d'évacuation de gaz (22), dans lequel un premier échangeur de chaleur (2) et un deuxième (5) sont reliés au contenant (1), le deuxième échangeur de chaleur (5) étant utilisable pour le refroidissement et le premier échangeur de chaleur (2) pour chauffer un mélange de gaz qui est amené par la conduite d'arrivée de gaz (21) au contenant (1) étanche au gaz, dans lequel, pour amener du gaz inerte dans le contenant (1), un réservoir de gaz inerte (8) communique avec le contenant (1), en particulier via la conduite d'arrivée de gaz (21), dans lequel le premier échangeur de chaleur (2) est relié à un réservoir d'eau chaude (3), dans lequel le réservoir d'eau chaude (3) est relié au moins à une pompe à chaleur (4) servant de source, la pompe à chaleur (4) étant reliée à au moins un réservoir d'eau froide (6) servant de source, et dans lequel le deuxième échangeur de chaleur (5) est relié à un réservoir d'eau froide (6), et dans lequel de la chaleur de process peut être récupérée au moyen de la pompe à chaleur (4) à partir d'eau provenant du réservoir d'eau froide et chauffée par échange de chaleur dans le deuxième échangeur de chaleur (5) et de l'eau chaude peut être amenée par la pompe à chaleur (4) au réservoir d'eau chaude (3) au moyen d'une arrivée (42).

11. Dispositif de séchage selon la revendication 10, **caractérisé en ce que** le réservoir d'eau chaude (3) est en outre relié à au moins avec une des sources suivantes : géothermie, chaleur de process, collecteurs solaires.

12. Dispositif de séchage selon la revendication 11, **caractérisé en ce que** la pompe à chaleur (4) est reliée en outre à au moins une des sources suivantes : géothermie, collecteur solaire ou autres sources de chaleur (46) à récupération de chaleur.

13. Dispositif de séchage selon la revendication 12, **caractérisé en ce que** le réservoir d'eau froide (6) communique avec un puits (7).

14. Dispositif de séchage selon l'une des revendications précédentes, **caractérisé en ce qu'**une entrée d'air (11) est prévue pour l'air ambiant, qui communique pour refroidir l'air ambiant avec le deuxième échangeur de chaleur (5), et l'air ambiant refroidi peut être amené par une conduite de dérivation (13) au contenant (1) via la conduite d'arrivée de gaz (21) en excluant le premier échangeur de chaleur (2).

15. Dispositif de séchage selon l'une des revendications précédentes, **caractérisé en ce que** le contenant (1) communique via la conduite d'évacuation de gaz (22), pour condenser de l'eau hors du mélange de gaz, avec le deuxième échangeur de chaleur (5), qui communique via une conduite de gaz (44) avec le premier échangeur de chaleur (2), qui communique via la conduite d'arrivée de gaz (21) avec le contenant (1) dans un circuit fermé pour le mélange de gaz.
